# EUROPEAN PATENT APPLICATION

(11) **EP 2 026 443 A2**
(43) Date of publication of application: **18.02.2009**
(21) Application number: 08161536.1
(22) Date of filing: 31.07.2008
(51) Int. Cl.: H02J 15/00, B60H 1/00, F24H 7/04, F28D 20/02

(54) **An energy storage process and system on a vehicle**

(30) Priority: 03.08.2007 EP 07113789
(71) Applicant: Iveco Motorenforschung AG, CH-9320 Arbon (CH)
(72) Inventor: Gstrein, Wolfgang, 9320 Arbon (CH)
(74) Representative: Borsano, Corrado

(57) **Abstract**

An energy storage process on a vehicle, comprising: electric energy generation and evaporation of a metal by means of said electric energy. The process comprises as well the subsequent transfer of heat from said metal to an appropriate means, for re-use as heat or to generate mechanical or electric energy. An energy storage system suitable to implement said process and a vehicle provided with said system are also disclosed.

## Description

### FIELD OF THE INVENTION

The present invention relates to a process for storing and subsequently using energy in vehicles, in particular for storing energy originally generated as electric energy.

### PRIOR ART

In the automotive industry, increasing use is being made of devices designed to convert braking energy into electric energy. Such devices range from simple electric retarders that dissipate kinetic energy by supplying braking torque to the drive shaft or to the vehicle's transmission system, to motor-generator units that generate electric energy during braking and use electric energy to supply mechanical energy to the vehicle during acceleration, or even replace the main engine in certain conditions to drive the vehicle (such systems are known as hybrid systems). A problem that is particularly felt concerns the fact that the energy generated by said devices cannot be used immediately. In case of electric retarders, the energy is simply dissipated or used to produce heat, for example to heat exhaust gas treatment systems, such as traps or catalysts to convert pollutant emissions. However, their use is not ideal as too much energy is generated in a very short time regardless of the actual requirements.

Attempts have therefore been made to store the energy that is produced, either for re-use as electric energy, or as thermal energy, but considerable problems are still being encountered.

Known energy storage systems are not capable of storing energy at suitably high densities, and are thus extremely bulky. For example, the energy can be stored in batteries, but, in addition to their large overall size, these also have a series of drawbacks, for example they cannot absorb high current peaks. Other systems such as ultracapacitors are inadequate in terms of energy density. Moreover, alternating current is usually generated and so such systems, in the same way as batteries, involve the use of a rectifier before the current is reconverted to alternating current. This increases the number of components that must be dimensioned for high currents even though, given the discontinuous generation, the total amount of energy that is produced may be relatively low. On the other hand, processes such as the generation of steam, used for example as the working fluid for a turbine, which can be used to deliver mechanical energy to the engine when necessary, or to generate electric energy again if preferred, require high temperatures and thus very high pressures in order to achieve an adequate level of efficiency during the subsequent conversion from thermal energy to electric energy. Such temperatures and pressures must be applied to large volumes of water to absorb all, or at least a large part of the energy that is generated. Large volumes are also necessary in order to warm a heat conveying fluid, for example to heat or maintain the temperature of the exhaust gases or relative treatment systems, or to warm up the engine during start-up.

The storage of compressed air or gas also requires the use of very high pressures and guarantees low densities of stored energy.

Lastly, the use of mechanical energy storage systems such as flywheels is complex and does not guarantee high energy densities. In vehicles such solutions are not practical for amounts of energy that are not insignificant.

Research is also underway to develop vehicles, such as electric vehicles, suitable to use types of energy other than that generated by fuel combustion on board the vehicle. The drawbacks of such vehicles regard the low density of the energy that can be stored using conventional systems. Moreover, in case of batteries, which are commonly used in electric vehicles, recharging is a very lengthy process, given the fact that excessively high currents cannot be absorbed. This significantly limits the use of such vehicles.

### SUMMARY

The problems described above have now been solved according to the present invention with an energy storage process on a vehicle, said process comprising:
electric energy generation;
evaporation of a metal, contained in a specific tank in said vehicle, using said electric energy.

The metal is preferably contained in a tank arranged on board the vehicle.

The process comprises the subsequent transfer of heat from said metal to an appropriate means, which can be the working fluid of a thermodynamic cycle for generating electric or mechanical energy, or the transfer of heat to a different kind of user. This can be achieved by means of the condensation of the metal vapour.

According to an embodiment of the invention, metal evaporation can be achieved by generating heat in electric resistors of an appropriate type powered by means of said electric energy so that heat is transferred to the metal by said resistors.

According to a preferred embodiment of the invention, the electric energy is used to heat the metal by means of an electric arc; according to an embodiment the arc is formed between an appropriately insulated electrode and the mass of the material to be evaporated. The metal and conditions for evaporation can be chosen according to specific requirements, for example the temperature (and consequent pressure) at which the energy is to be stored, also depending on the subsequent use.

The electric energy can be generated on board the vehicle, and can derive from the conversion of the vehicle's kinetic energy, as in the case of electric retarders or motor-generator units.

The electric energy can be supplied to the vehicle from the outside and used to drive the vehicle, for example via a steam or gas cycle.

The invention also relates to an energy storage system, through which the process described above can be implemented, and a vehicle provided with said system. The invention relates in particular to what set forth in the claims, which are attached hereto.

### LIST OF DRAWINGS

The present invention will now be illustrated through the following detailed description of preferred but not exclusive embodiments, provided merely by way of example, with the help of the drawings attached hereto in which:
figure 1 is the diagram of an energy storage system according to the present invention;
figure 2 is a schematic illustration of an energy accumulator;
figures 3 and 4 show data indicating, respectively, the energy storage capacity of various storage means with respect to a same volume or weight, respectively, of automotive diesel fuel;
figures 5 and 6 schematically show metal tanks for accumulating energy according to other possible embodiments of the invention.

### DETAILED DESCRIPTION OF A PREFERRED EMBODIMENT

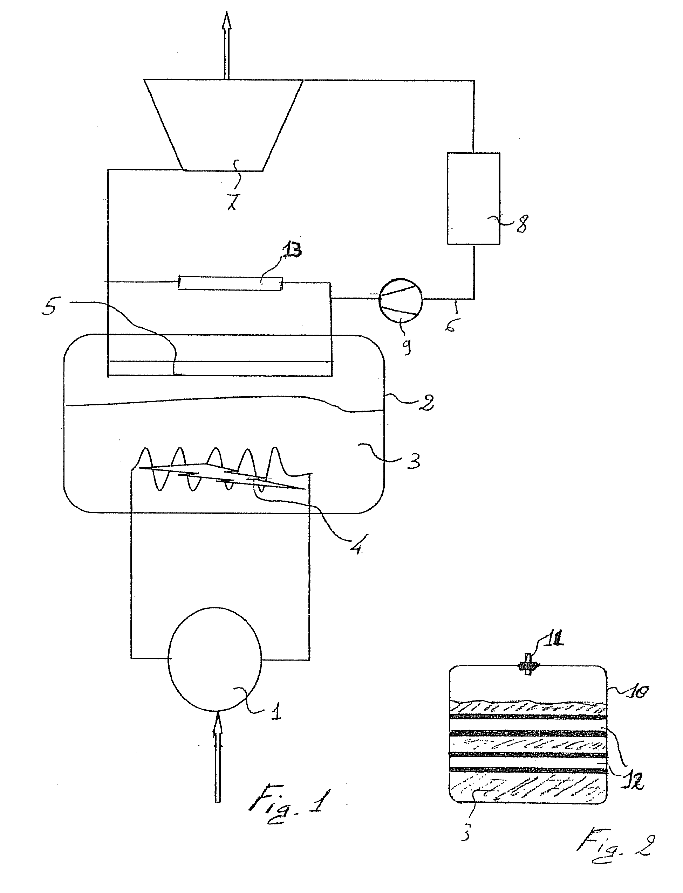

Figure 1 is a schematic illustration of an energy storage system according to a particular embodiment of the present invention. There is an electric generator 1, which can be of any known type, and in particular it can be a generator arranged on board the vehicle, suitable to regenerate the braking energy, such as a retarder or motor generator unit, of a known type. According to another embodiment of the invention, it can be an external source of energy, suitable to deliver power during a recharging phase, connected to the vehicle in an appropriate manner. A tank 2 contains the metal 3. The material can be a metal element or an alloy. In this case the alloy may , according to a preferred embodiment, have a composition corresponding or close to an eutectic composition, in order to have a lower melting point. Preferred metals are lithium, which is advantageous for its low specific weight, thanks to which it is particularly suitable for vehicle applications, where a light weight is essential, magnesium and aluminium, in particular aluminium for higher temperatures. Note that with lithium and magnesium (or other appropriately chosen metals) it is easy to work while maintaining the tank at pressures of even less than 10 bar. Anyway, any metal deemed to be suited can be employed according to the present invention. Other metals may be potassium or zinc for temperatures below 1000°C, while lithium can be used for temperatures above 1000°C, for example 1350°C.

Metal evaporation can be achieved in an appropriate way, such as by means of a heater 4, which can be an electric heater, for example one or more resistors suitable to be powered by the electric energy produced by the generator 1. The resistors can be buried in an appropriate position in the metal.

According to a preferred embodiment, the heater can be of the electric arc type. The arc can be achieved between two electrodes, or between an electrode and the mass of the still condensed metal. This solution is particularly simple, as only one insulated electrode must be provided for the mass of metal contained in the tank 2. In any case, the electrodes must be arranged in a suitable position to allow the arc to develop in an area of the tank in which the metal is in the vaporous state. Furthermore the difference in the level of the metal in the tank in the condensed state must also be considered.

The conditions under which evaporation can occur (and thus the size of the tank, the amount of metal it can contain...) must be chosen according to specific requirements. Depending on the type of metal and specific requirements, conditions can be achieved, under which the metal passes directly from the solid state to the vapour state and vice versa, or, more frequently, liquefaction occurs. In any case, solidification of the metal (for example if no energy is stored for sufficiently long periods of time, for example while the vehicle is at a standstill) is not a problem. The tank can be designed as a closed system, suitable to exchange heat with the outside, in particular to transfer heat to an external fluid or user, for example by means of a heat exchanger 5 of a suitable type which can internal with respect to the tank.

The stored energy is transferred in the form of heat to be re-used. For example, there can be a steam or gas cycle to generate mechanical or electric energy.

Figure 1 is a schematic illustration of a circuit in which a compressed fluid is heated or evaporated in the heat exchanger 5 for expansion in a turbine 7. A cooler 8 and the pump or compressor 9 complete the circuit as usual. The cooler can be a heat exchanger or a condenser depending on the type of cycle, and is arranged in an appropriate manner on the vehicle, for example with the radiator to enable adequate cooling. The turbine 7 can be connected to the drive shaft for example to deliver mechanical energy when needed.

The heat can also be used as such, for example to heat the exhaust gas treatment systems or to warm up the engine during start-up.

The system can also be integrated by another system, for example a steam cycle or other type of system to regenerate the heat from the exhaust gases. For example, there can be a recuperator (a second heat exchanger) 13 that receives heat from the exhaust gases, arranged in parallel (as illustrated) or arranged differently in relation to the heat exchanger 5. A valve arrangement can distribute the water or fluid of the circuit 6.

Otherwise the stored energy can be used to heat the engine while warming up, for example by heating the water in the radiator. The same water from the circuit 6 can be used, if said circuit is a water circuit, or, anyway, the same fluid capable of generating steam, appropriately withdrawn and circulated into the engine; otherwise, several heat exchangers can be provided, in the tank 2, for several separate circuits.

Instead of the turbine there can also be another type of steam engine. There can also be other types of cycles, for example gas cycles.

The turbine or engine can also drive the vehicle in case of a vehicle powered by means of an external electric energy source. In that case an appropriate electric energy source can be connected, with the vehicle at a standstill while recharging the recuperator 4, by means of the appropriate connections. In that case the tank 2 must be of a suitable size in order to cope with the fact that the stored energy is the only or main source of energy used to drive the vehicle. Compared to electric vehicles there is the important advantage that, whereas recharging the batteries of the latter takes several hours, an adequate amount of energy can be stored in a tank such as that described herein in just a few minutes, since there are no limits concerning the amount of current that can be absorbed, provided the heater is of a suitable size.

Note that in a vehicle with an internal combustion engine, such as an industrial vehicle, where the present invention is applied to regenerate braking energy, the tank can be very small, as a compromise can be reached between the size and the maximum amount of energy that can be stored..

The tank can be implemented in a suitable manner, for example it can be made of a ceramic or refractory material, if necessary reinforced by means of metal parts.

Figure 2 is a schematic illustration of a tank having a casing 10 made of an appropriate material containing the metal 3. The first electrode 11 can be connected to the generator and extend, appropriately insulated inside the casing. The other pole of the generator, which can also be a ground connection, can be connected to a second electrode (not shown) or, via an appropriate system, to the mass of the metal 3, to enable the formation of an electric arc with the first electrode.

A series of pipes 12 can run through the casing. Said pipes can be obtained integrally with the casing and are suitable to convey a fluid, which can be that of the circuit 6, or a heat conveying fluid, so as to receive heat through the walls of the pipes from the metal 3, in order to make the evaporated part condense. The pipes have ends that can be connected to external conduits and the inside of said pipes is completely insulated from the rest of the inside of the tank.

The tank can be thermally insulated from the outside in an appropriate manner, also according to the need to preserve the heat inside it (in general, especially if the tank is used to store energy produced on board the vehicle, long-term storage is not necessary, the insulation in any case being necessarily sufficient to protect the other structures against high temperatures). Considerable advantages can be achieved with the process according to the present invention. The tank can be dimensioned, as described previously, according to specific requirements and can store energy as latent heat, even at temperatures of more than 1000 and even 2000 °C, depending on the metal that is used, without reaching excessively high pressure levels. Said temperatures allow a steam cycle to be implemented to regenerate energy by transferring the heat to the fluid at high temperatures, even as high as 600 ° and above, to achieve an efficient thermodynamic cycle. However, on a vehicle the applicable temperatures are more likely to be around 400 °C with a pressure of about 50 bar, which represents a good compromise between efficiency and complexity of the structure.

The electric energy that is generated can be used as such, whether direct or alternating current, without the need for rectifiers or inverters.

In case of thermodynamic cycles such as that to which the diagram in figure 1 refers, there is no need for large fluid volumes (for example water and vapour) which, unlike metal vapour, reach very high pressures. Valves and by-passes can be provided to regulate the amount of fluid that is heated and the amount of heat it receives, for example a by-pass can be placed in parallel to the heat exchanger 5, allowing the stored heat to be used as required.

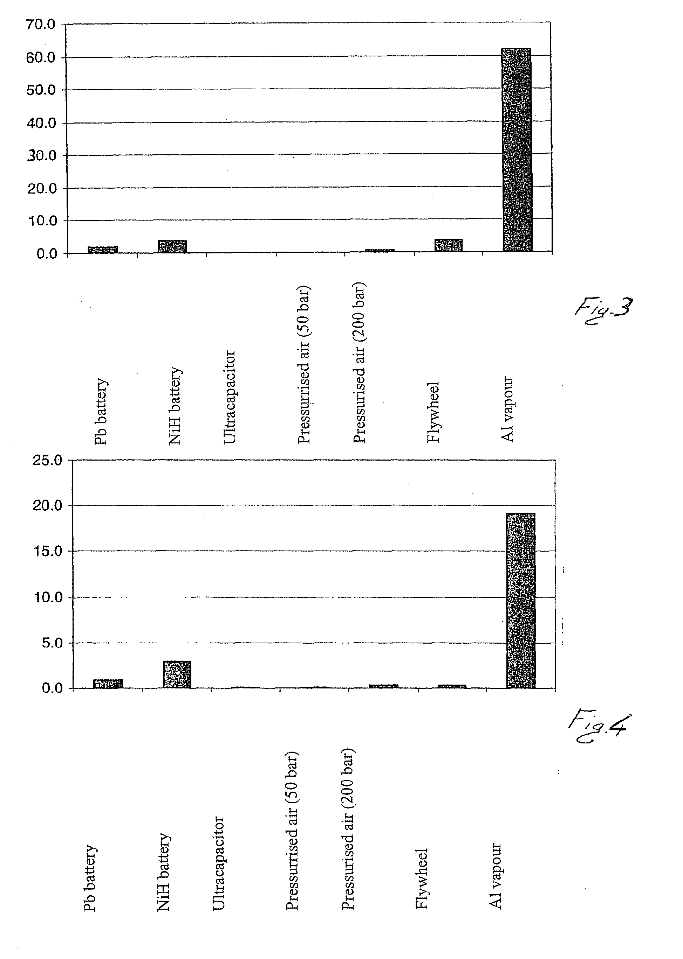

The density of the stored energy is considerably higher than with conventional energy storage systems, as illustrated in the bar charts in figures 3 and 4. The charts compare the stored energy, shown as a percentage in relation to the same volume (figure 3) or weight (figure 4) of automotive diesel fuel, for various conventional systems, with the energy that can be stored using aluminium vapour. As said above, also with vapours of other metals, considerably better results can be achieved, with respect to known art.

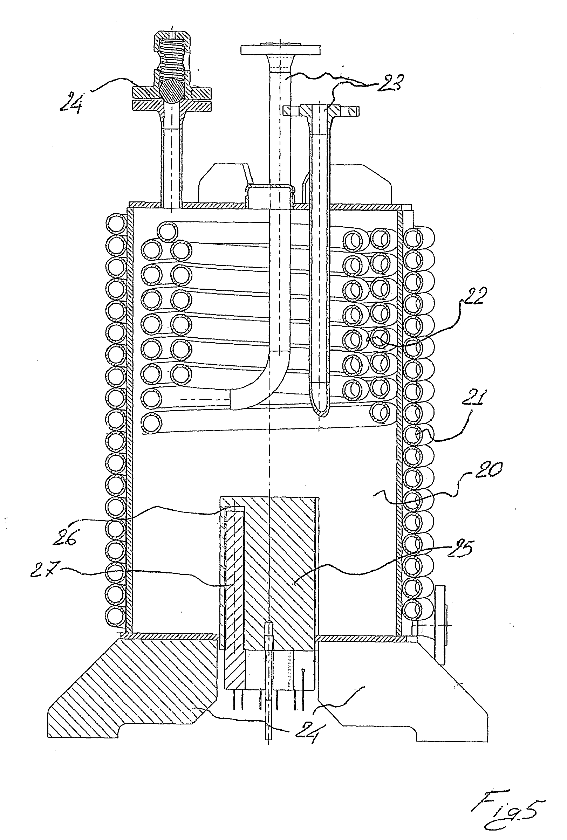

Figure 5 schematically shows a section view, along a vertical plane of a metal tank, which is suitable for vehicular applications of the present invention. In particular the stored heat can be used for powering a thermodynamic cycle, for example a Rankine cycle. A vessel 20 can be made of a suitable material capable of withstanding pressure and temperature of the evaporated metal, for example austenitic steel, Ni alloys such as Inconel® , Nimonic®. The vessel 20 is intended for being filled for about one third of its volume of the metal used for energy storage. The tank also comprises structures for thermal exchange, in order to transfer the heat to the working medium of the thermodynamic cycle, for example water steam.

For example pipes can be provided inside and/or outside the vessel 20; for example a preheater 21 can be provided around the vessel and a superheater 22 inside. Both can be conformed as a coil pipe, the pipe inside the vessel can be at a location where it is reached by the metal vapour and above by the metal in its condensed state, which is collected on the bottom of the vessel. Reference 23 denotes inlet and outlet for the working medium into and from the superheater, 24 denotes a safety valve against overpressure. If such a valve is provided a casing must be provided to avoid that the metal or its vapours can flow into the environment. The tank can be provided with (insulated) supports 24 in order to be capable of standing, or other kind of structure for placing or fixing the tank to other structures of the vehicle can be foreseen. A heating device 25 is provided in the vessel in order to convert the electric energy into heat and to transfer the heat I to the metal contained in the vessel. It may be a cylinder, for example of the same material of the vessel, having one or more seats 26 for housing insulated resistors 27. The resistors may be of any kind, for example carbon resistors or tungsten wires or Constantan® resistors. The heating device is preferably drowned in the metal to be evaporated, thus is preferably placed in the bottom of the vessel. The heating device, the pipes and the other parts of the vessel may be welded together. The vessel is preferably thermally insulated, for example by a coating (not shown) of glass fiber or a casing (not shown) filled with powder for example of mineral of suitable kind, for example titania powder. The thickness of the insulation may be in the order of about 10 cm.

As an example, it has been found that for a vehicle of about 40t having an engine of about 400 kW, and a steam engine of about 40kW (which may be a typical dimensioning of steam engines for recuperating braking and exhaust heat) a tank with a vessel of about 100l capacity (i.e containing about 30l metal) could be suitable for continuous downhill braking, when lithium is used.

If heat is generated by an electric arc a ceramic vessel is preferred.

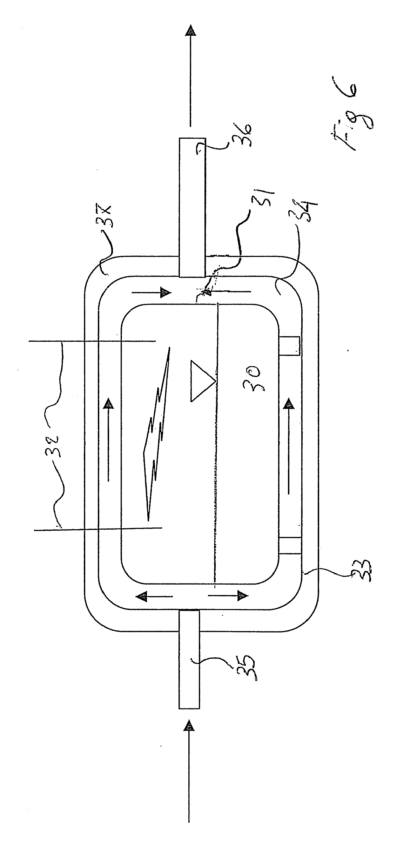

Figure 6 shows another possible embodiment. The metal 30 is stored in a ceramic vessel 31, and electrodes 32 are provided to generate an electric arc. A further casing 33 surrounds the vessel and an interspace 34 is created therebetween. The working media is made to circulate in such an interspace, entering by inlet 35 and exiting by outlet 36. insulating coating surrounds the casing 33.

Thanks to the presently claimed process and system, the energy produced while the generator is able to work can be used at a later date, when requested by the vehicle. The vehicle can be a motor vehicle, in particular an industrial vehicle, or another type of vehicle, such as a railway vehicle, in particular a railway vehicle other than an electrically driven railway vehicle, for use on railways with no electric line, so that the braking energy cannot be re-introduced into said line.

The hazard rating of the metal tank is comparable to that of fuel tank of similar dimensions.

## Claims

1. An energy storage process on a vehicle, said process comprising:
electric energy generation;
evaporation of a metal, contained in a specific tank in said vehicle, using said electric energy.

2. Process according to claim 1 comprising the heating of said metal by means of resistors powered by said electric energy.

3. Process according to claim 1 comprising the heating of said metal by means of an electric arc powered by said electric energy.

4. Process according to any of the previous claims comprising the transfer of the latent heat of evaporation from the metal to a heat conveying fluid or the working fluid of a thermodynamic cycle to generate mechanical or electric energy.

5. Process according to claim 4, wherein said thermodynamic cycle is a steam cycle.

6. Process according to claim 4 or 5 wherein the mechanical energy is used to drive the vehicle, in addition to the action of an internal combustion engine.

7. Process according to any of the previous claims wherein the generator is on board a vehicle provided with an internal combustion engine and is suitable to convert the vehicle's kinetic energy into electric energy, in particular during braking.

8. Process according to any of the claims from 1 to 6 wherein the electric energy is provided by an external source and the stored energy is used to drive the vehicle.

9. Process according to any of the previous claims wherein the metal is lithium, magnesium or aluminium or an alloy comprising one or more of said elements.

10. Process according to any of the previous claims wherein the metal is an alloy, preferably of eutectic composition.

11. Process according to any of the previous claims wherein evaporation occurs at a temperature of above 1000 °C.

12. Process according to any of the previous claims wherein evaporation occurs at a pressure of up to 10 bar.

13. Energy storage system for a vehicle comprising:
a tank (2) containing a metal (3);
heating means (4) suitable to make said metal evaporate when powered by means of the electric energy;
a heat exchanger (5) suitable to transfer the heat from said metal to a heat conveying fluid or the working fluid of a thermodynamic cycle to convert the heat that has been transferred into mechanical or electric energy.

14. System according to claim 13 suitable to carry out the process according to any of the claims from 1 to 11.

15. Vehicle equipped with the system according to claim 13 or 14.

16. Vehicle according to claim 15 comprising an electric generator suitable to deliver energy to said tank and convert the vehicle's kinetic energy, during braking or deceleration, into electric energy.

17. Vehicle according to claim 15 comprising a steam or gas circuit to convert the energy stored by the metal into mechanical energy, said circuit being suitable to drive the vehicle, suitable to be connected to an external electric power source, to supply said heating means.
